(19) **Europäisches Patentamt**

**European Patent Office**

**Office européen des brevets**

(11) Veröffentlichungsnummer: **0 268 734**
**B1**

(12) **EUROPÄISCHE PATENTSCHRIFT**

(45) Veröffentlichungstag der Patentschrift:
05.09.90

(21) Anmeldenummer: 87109085.8

(22) Anmeldetag: 24.06.87

(51) Int. Cl.⁵: **B60K 5/12, F16F 1/36, F16F 3/08**

(54) Körperschallisolierendes weiches Lager.

(30) Priorität: 28.10.86 DE 3636674

(43) Veröffentlichungstag der Anmeldung:
01.06.88 Patentblatt 88/22

(45) Bekanntmachung des Hinweises auf die Patenterteilung:
05.09.90 Patentblatt 90/36

(84) Benannte Vertragsstaaten:
DE FR GB IT

(56) Entgegenhaltungen:
EP-A- 0 019 533
EP-A- 0 038 547
EP-A- 0 192 936
DE-A- 3 238 924
DE-U- 1 791 052
FR-A- 2 360 014
US-A- 2 470 185
US-A- 2 560 620

(73) Patentinhaber: WOCO Franz-Josef Wolf & Co.,
Sprudelallee 19, D-6483 Bad Soden-Salmünster(DE)
Patentinhaber: Volkswagen AG, D-3180 Wolfsburg 1(DE)

(72) Erfinder: Wolf, Franz-Josef, Sprudelallee 19, D-6483 Bad
Soden-Salmünster(DE)
Erfinder: Pletsch, Hubert, Am Quellenrain 13,
D-6483 Bad Soden-Salmünster(DE)
Erfinder: Weber, Otto, J.-F.-Kennedy-Allee 93,
D-3180 Wolfsburg(DE)
Erfinder: Keck, Volkmar, Frauenteichstrasse 43,
D-3180 Wolfsburg(DE)

(74) Vertreter: Jaeger, Klaus, Dr. et al, Patentanwälte
JAEGER, LORENZ & KÖSTER Pippinplatz 4a,
D-8035 München-Gauting(DE)

ACTORUM AG

# Beschreibung

Die Erfindung betrifft ein körperschallisolierendes weiches Lager, insbesondere ein Lager für eine Brennkraftmaschine, mit einem weichen Tragfederblock aus einem elastischen Werkstoff zwischen zwei krafteinleitenden Lagergehäusetöpfen, die einander mit Spiel koaxial teleskopartig übergreifen und unter Bildung eines zweiseitigen Federwegbegrenzers elastomergepuffert einander hintergreifen.

Ein Lager dieser Art ist aus der deutschen Offenlegungsschrift DE 35 06 977 A1 bekannt. Das bekannte Lager weist eine ausgezeichnete Körperschallisolierung, also eine gute akustische Abkopplung der beiden krafteinleitenden Lagergehäusetöpfe voneinander, und eine wünschenswert weiche lineare Federkennlinie auf, muß für diese Vorteile aber den Nachteil eines recht eng bemessenen nutzbaren Arbeitsbereiches in Kauf nehmen. Zwar könnte durch eine weitere Bemessung des Abstandes zwischen den elastomergepufferten Anschlägen der verfügbare Arbeitsbereich konstruktiv ohne weiteres verbreitert werden, jedoch würde dies insbesondere bei niederfrequenten Schwingungen im Bereich um oder unter 10 bis 20 Hz und großen Amplituden dazu führen, daß die zu federnde Nutzlast, beispielsweise die Brennkraftmaschine eines Kraftfahrzeuges, mit einer solchen Beschleunigung auf die Elastomeranschläge des Federwegbegrenzers aufschlägt, daß ein solches Federverhalten bzw. ein solches Lagerverhalten kaum noch im Einklang mit einer entsprechend gestellten Federaufgabe stünde. Die knappe Einstellung des frei verfügbaren Federweges der Tragfeder, also die relativ enge Begrenzung des linearen Arbeitsbereiches der weichen Tragfeder, ist daher das kleinere Übel der Wahl.

Ausgehend von diesem Stand der Technik liegt der Erfindung die Aufgabe zugrunde, ein weiches körperschallisolierendes Elastomerlager der vorstehend beschriebenen Art so weiterzuentwickeln, daß der zur Lösung der dynamischen Federaufgabe effektiv verfügbare lineare weiche Kennlinienbereich signifikant verbreitert werden kann, ohne eine unerwünscht große Federwegamplitude mit allen damit verbundenen Nachteilen in Kauf nehmen zu müssen.

Die Erfindung löst diese Aufgabe durch ein körperschallisolierendes weiches Lager der vorstehend beschriebenen Art, wie es insbesondere im Kraftfahrzeugbau zum Lagern einer Brennkraftmaschine von Kraftfahrzeugen verwendet wird, bei dem die im kennzeichnenden Teil des Anspruchs 1 genannten Merkmale verwirklicht sind.

Ausgestaltungen der Erfindung sind Gegenstand der Unteransprüche.

Der die Erfindung wesentlich tragende Gedanke ist also der, bei dem bekannten Lager den passiven Anschlag-Elastomerpuffer des Federwegbegrenzers, der einen stetig progressiven Kennlinienast erzeugt, durch einen aktiven Gummipuffer zu ersetzen, der die Arbeitskennlinie der Tragfeder nicht nur abschließend begrenzt, sondern im Arbeitsbereich gestaltend modifiziert. Dieser aktive Elastomerpuffer ist ein Elastomerpuffer, d.h. eine Elastomerfeder, die zur Aufnahme einer Kompressionskraft bestimmt ist, der geometrisch so gestaltet ist, daß die die Last aufnehmende und puffernde Elastomersäule der Last nicht nur durch eine elastische Rückstellkraft entgegenwirkt, sonden auch quer zum Auflastvektor ausknickt. Dies bedeutet, daß die Federkonstante eines solchen Puffers mit Knickeffekt beim Ausknicken schlagartig vom jeweiligen Arbeitswert auf praktisch Null abfällt. Die Federkennlinie und die Federkonstante steigen bei höherer Last erst dann wieder an, wenn die zusammengebrochene Pufferstruktur einer Materialverpressung des Elastomers unterliegt. Elastomerpuffer mit solchem Verhalten sind im folgenden kurz als "Knickpuffer" bezeichnet. Die einfachste Form eines solchen Knickpuffers ist beispielsweise ein axialbelasteter stabförmiger Gummipuffer, der zunächst die übliche materialbedingte Federkennlinie zeigt, bis er dann durch eine inhomogene Verteilung der Querverformungskomponenten bei zunehmender Last seitlich ausknickt. Auch ein axialbelasteter Schlauchabschnitt ist ein Knickpuffer im hier definierten Sinne. Während jedoch sowohl bei dem zylindrischen Stabpuffer als auch bei dem zylindrischen Hohlfederpuffer, nämlich dem Schlauchabschnitt, letztlich der Zufall der Ausbildung der inhomogenen Querkomponentenverteilung bestimmt, unter welcher Last ein solcher Puffer ausknickt, kann der Ausknickpunkt durch eine Präformierung der Knickgeometrie bereits im unbelasteten Puffer recht genau festgelegt werden. Typische Beispiele für solche Knickpuffer sind beispielsweise axial belastete Elastomerhohlfedern mit mehr oder minder ausgeprägter tonnenförmiger oder sanduhrförmiger Konfiguration. Entscheidend ist dabei lediglich, daß die tragende Elastomersäule im unbelasteten Puffer bei linearer Verbindung des Auflagers mit dem Widerlager an keiner Stelle aus dem Material austritt, da bei Belastung sonst von vornherein statt einer anfänglichen elastischen Rückstellung ein bloßes Wegknicken der Elastomerstruktur ohne nutzbare elastische Rückstellung erhalten wird. Solche Strukturen sind keine Knickpuffer im Sinne der vorliegenden Erfindung.

Während bei dem bekannten weichen körperschallisolierenden Lager vom Einsatzpunkt aus zunächst der weiche lineare Kennlinienabschnitt der Tragfeder durchlaufen wird, und zwar bis zum Pufferanschlag, der den linearen Arbeitsbereich durch einen ausgeprägt progressiven Kennlinienabschnitt abschließt, weist die Kennlinie des Lagers gemäß der Erfindung nach einem gegebenenfalls und vorzugsweise vorgeschalteten Freiwegabschnitt des linearen Arbeitsbereiches der weichen Tragfeder einen steilen sprungartigen Anstieg der Federkennlinie auf, der sich additiv aus der Federkonstanten des Knickpuffers und der Tragfeder zusammensetzt. In dem Augenblick jedoch, in dem der Knickpuffer ausknickt, ist die Kennlinie des Lagers gemäß der Erfindung praktisch allein durch die Kennlinie der weichen Tragfeder bestimmt. In der Kennlinie des Lagers tritt erst der Einfluß des Knickpuffers jetzt dann wieder in Erscheinung, wenn dieser materialverpreßt wird. Dies führt dann in der Kennlinie zum Auftreten des die Lagerkennlinie abschließenden Progressionsbereiches.

Durch die Ausbildung der Anschlagpuffer des Federwegbegrenzers im bekannten weichen körperschallisolierenden Lager als Knickpuffer wird im Lager gemäß der Erfindung durch die Erzeugung des Sprunges in der Arbeitsfederkennlinie der Tragfeder erreicht, daß bei praktisch unverändert kurzem Arbeitsfederweg ein Mehrfaches der unter vergleichbaren Bedingungen von dem bekannten Lager zu bewältigenden Nutzlast weich abgefedert werden kann. Ohne daß also der konstruktiv tatsächlich benötigte Federweg verlängert wird, kann jedoch der effektiv nutzbare Abschnitt auf der weichen linearen Kennlinie der Tragfeder um ein Vielfaches verlängert werden. Dabei wird in der Praxis die Höhe dieses Kennliniensprunges, also die Härte des Knickpuffers vor dem Einknicken, so eingestellt, daß der hart abgefederte Anteil der abzufedernden Gesamtnutzlast wirkungsmäßig vernachlässigbar klein zur Masse des Bezugssystems, d.h. zur Masse des Widerlagersystems ist. Bezogen auf das Beispiel der Lagerung einer Brennkraftmaschine in einem Kraftfahrzeug bedeutet dies, daß von der schwingenden Brennkraftmaschine nur der Anteil der beschleunigten Masse am Knickpuffer hart abgefedert wird, der gegenüber der trägen Masse des Gesamtfahrzeuges so gering ist, daß er die träge Masse des Gesamtfahrzeuges zumindest nicht merklich beschleunigt. Der über diesen Komfortgrenzwert hinausgehende Anteil der schwingenden Masse der Brennkraftmaschine wird dann von der eigentlichen Tragfeder des Lagers gemäß der Erfindung weich abgefedert, so daß diese Kraft also in der Feder vernichtet wird, ohne auf Chassis und Karrosserie des Kraftfahrzeuges übertragen zu werden.

Insbesondere im Hinblick auf seine Verwendung im Kraftfahrzeugbau ist das Lager gemäß der Erfindung vorzugsweise so ausgebildet, daß der eine der beiden Lagergehäusetöpfe einen Außenflansch trägt und der andere eine nach radial innen offene Ringkammer aufweist, in die der Außenflansch mit axialem und radialem Spiel eingreift. Dabei trägt der Außenflansch sowohl auf seiner dem Gegentopf zugekehrten Oberseite als auch auf seiner gegenüberliegenden Unterseite die Knickpuffer, die mit den radialen Begrenzungswänden der Ringkammer als Anschlagringflächen zusammenwirken. Dabei sind die Knickpuffer vorzugsweise ringförmig ausgebildet, wobei jeder der Knickpufferringe mit zueinander parallelen und, soweit sie sich durch die Ringöffnung voneinander getrennt einander gegenüberliegen, koaxialen, in ein- und derselben Radialebene liegenden beidseitig offenen Kanälen durchsetzt ist, deren Querschnitte so gestaltet sind, daß die Kanalwände nach Überschreiten einer konstruktiv vorgegebenen Grenzlast einknicken. Im einfachsten Fall hätten die relativ dicht nebeneinanderliegenden Kanäle also quadratischen oder stehend rechteckigen Querschnitt. Zum Zwecke einer möglichst exakten Festlegung des Knickpunktes des Knickpuffers sind die Querschnitte der in dem Knickpufferring ausgebildeten Kanäle jedoch vorzugsweise alternierend in Form stehender Rauten und stehender doppeltrapezförmiger Sechsecke mit innenliegender kleiner Basislinie, also nach Art des Querschnitts einer Sanduhr, jedoch nicht so stark eingeschnürt wie diese, ausgebildet. Diese Ausgestaltung des Knickpuffers weist den Vorteil der besonders kostengünstigen Herstellbarkeit auf, da zur Herstellung solcher Gummiformkörper vergleichsweise preiswerte Formwerkzeuge eingesetzt werden können.

Für den praktischen Einsatz des Lagers gemäß der Erfindung ist dieses vorzugsweise so in der einem Soll-Auflastvektor entgegengesetzten Richtung vorgespannt, daß das Lager beim statischen Tragen der entsprechend der Einsatzbestimmung vorgegebenen Soll-Last die Knickpuffer einen vorgegebenen freien Abstand zu den Anschlagflächen des Federbegrenzers des Lagers einstellen läßt. Ohne diese Vorspannung würde das Lager ein asymmetrisches Schwingverhalten zeigen, das in den meisten Anwendungsfällen kaum erwünscht sein dürfte.

Ein Ausführungsbeispiel der Erfindung ist im folgenden anhand der Zeichnung näher erläutert. Dabei zeigt die einzige Figur, nämlich die

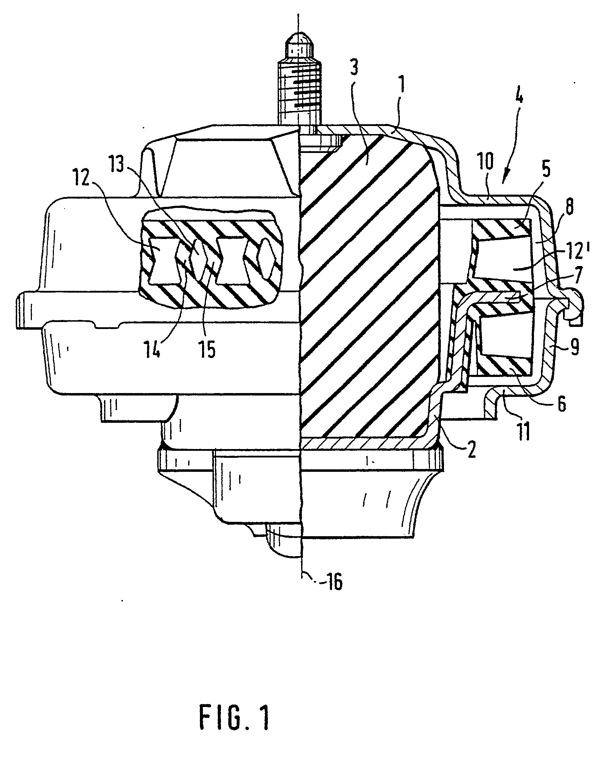

Fig. 1 teils in Seitensicht, teils im Axialschnitt ein Ausführungsbeispiel des körperschallisolierenden weichen Lagers in der Ausgestaltung als Motorlager für ein Kraftfahrzeug.

Ein Ausführungsbeispiel des körperschallisolierenden weichen Lagers der Erfindung ist, teilweise in Seitensicht, teilweise weggebrochen, teilweise im Axialschnitt in der Fig. 1 dargestellt. Das gezeigte Lager ist ein Motorlager für ein Kraftfahrzeug. Zwischen zwei krafteinleitenden Lagergehäusetöpfen 1,2 ist ein weicher Tragfederblock 3 aus Gummi eingefügt. Die beiden Lagergehäusetöpfe 1,2 übergreifen einander mit Spiel koaxial teleskopartig und hintergreifen einander elastomergepuffert unter Bildung eines zweiseitig wirkenden Federwegbegrenzers 4. "Zweiseitig wirksam" heißt dabei, daß der Federweg in der Darstellung in der Fig. 1 sowohl nach oben durch einen Gummipuffer als auch nach unten durch einen zweiten Gummipuffer in seiner freien Schwingungsamplitude begrenzt ist. In der weiter unten näher erläuterten Weise sind diese Gummipuffer des Federwegbegrenzers 4 als Knickpuffer 5,6 ausgebildet.

Bei dem in Fig. 1 gezeigten Ausführungsbeispiel des Lagers dient der untere Lagergehäusetopf 2 als Widerlager für die Tragfeder 3 und trägt an seinem oberen Rand einen Außenflansch 7. Der als Auflager dienende obere Lagergehäusetopf 1 weist eine nach radial innen offene Ringkammer 8 auf, in die der Außenflansch 7 des unteren Lagergehäusetopfes 2 eingreift. Der Eingriff erfolgt dabei so, daß der Außenflansch mit seinen Knicklagern 5,6 sowohl radial gegen den Zylindermantel 9 der Ringkammer 8 als auch axial gegen die radial liegenden seitlichen Begrenzungswände 10,11 der Ringkammer 8 ausreichend freies Spiel aufweist Dabei ist in der Fig. 1 ein Lager gezeigt, das so eingestellt ist, daß im unbelasteten Zustand des Lagers die Knickpuffer 5,6 die Radialwände 10,11 nicht berühren. In der Regel wird die Tragfeder 3 vorzugsweise in der Art vorgespannt sein, daß der Knickpuffer 6 mit einer vorgegebenen Kraft auf die untere Radialfläche 11 der Ringkammer 8 gezwungen wird. Diese Kraft ist dabei so bemessen, daß das Lager dann bei statischer Sollbelastung, d.h. also in dem hier gewählten Ausführungsbeispiel bei aufgesetztem Motorblock und stehendem Fahrzeug, die in der Fig. 1 für den unbelasteten Zustand gezeigte Konfiguration aufweist. Durch diese Vorspannung der Tragfeder 3 wird also ein symmetrisches Schwingverhalten des bestimmungsgemäß eingesetzten Lagers erzielt.

In dem in Fig. 1 gezeigten Ausführungsbeispiel sind die Tragfeder 3 und die Knickpuffer 5,6 konzentrisch in der Weise zueinander angeordnet, daß die Knickpuffer 5,6 die Tragfeder 3 ringförmig umgeben, und zwar geschlossen in sich umlaufend. In ersichtlicher Weise ist es jedoch prinzipiell nicht unbedingt erforderlich, daß die Knickpuffer geschlossen umlaufend ausgebildet sind. Vielmehr wird es für eine Reihe von speziellen Anwendungsfällen sogar durchaus vorteilhaft sein, den Knickpufferring zu segmentieren. Dies sind jedoch anwendungstechnische Probleme, die auf das Prinzip der Erfindung keinen Einfluß haben.

Die Knickpufferringe weisen dabei von der zentralen Tragfeder radial einen solchen Mindestabstand auf, daß die Außenwand der Tragfeder bei maximaler Belastung die Innenwand der Knickpufferringe nicht berührt. Dadurch wird in jedem Fall eine die Federkennlinie des Lagers verfälschende unmittelbare Berührungskopplung zwischen beiden Federgliedern ausgeschaltet.

In dem in Fig. 1 gezeigten Ausführungsbeispiel ist jeder der beiden Knickpufferringe 5,6 ein Elastomerpufferring, der mit zueinander parallelen und, soweit sie sich durch die Ringöffnung voneinander getrennt gegenüberliegen, koaxialen in ein und derselben Radialebene liegenden beidseitig offenen Kanälen 12,13 durchsetzt ist. Dabei sind die Querschnitte dieser Kanäle so gestaltet, daß die Kanalwände 14,15 nach Überschreiten einer konstruktiv vorgegebenen axialen Grenzbelastung einknicken. Dies ist in der aus Fig. 1 ersichtlichen Weise bei dem vorliegenden und hier beschriebenen Ausführungsbeispiel dadurch bewirkt, daß die Querschnitte der Kanäle im Elastomerpufferring alternierend die Form einer stehenden Raute (Kanal 13) und eines stehenden doppeltrapezförmigen Sechsecks (Kanal 12) mit innenliegender kleiner Basislinie haben. Der Querschnitt des Kanals 12 entspricht also konfigurativ im wesentlichen dem Querschnitt durch eine Sanduhr, wobei jedoch das Sechseck des Profils des Kanals 12 eine breitere Taille als der Querschnitt einer Sanduhr aufweist.

Die Kanäle 12,13 im Elastomerpufferring verlaufen insbesondere streng parallel zueinander, so daß also ein die Mittelachse 16 des Lagers schneidender Kanal radial verläuft, während die anderen Kanäle parallel zu einem solchen Mittelkanal auf Sekanten, bezogen auf die Radialebene des Lagers, liegen. Dabei ist es weitgehend unwesentlich, ob der unmittelbar an, auf oder in der Peripherie des Elastomerpufferringes liegende Kanal 12' angeschnitten, in der in Fig. 1 gezeigten Weise vollständig offen oder gerade vollständig geschlossen ist. Solche Ausgestaltungen liegen im Rahmen der vom Fachmann ohne weiteres vorzunehmenden Feinabstimmung für den speziellen Anwendungsfall.

Die Knickpufferringe 5,6 sind oberhalb und unterhalb des Außenflansches 7 des Lagergehäusetopfes 2 identisch ausgebildet.

Der Tragfederblock 3 ist in einer hier in der Figur nicht im einzelnen dargestellten und an sich bekannten Weise ein Elastomerpuffer, der mit Scharen untereinander paralleler, einander ohne sich zu schneiden in verschiedenen Radialebenen kreuzenden, in regelmäßigen Abständen kugelförmige Hohlräume durchsetzenden Kanälen durchsetzt. Ein solcherart ausgebildeter Tragfederblock zeichnet sich bei hoher mechanischer Festigkeit durch einen weiten und weichen linearen Kennlinienverlauf aus.

**Patentansprüche**

1. Körperschallisolierendes weiches Lager, insbesondere für eine Brennkraftmaschine, mit einem weichen Tragfederblock (3) aus elastischem Werkstoff zwischen zwei krafteinleitenden Lagergehäusetöpfen (1,2), die einander mit Spiel koaxial teleskopartig übergreifen und unter Bildung eines zweiseitigen Federwegbegrenzers elastomergepuffert einander hintergreifen,
dadurch **gekennzeichnet,**
daß die Elastomerpuffer des Federwegbegrenzers (4) auf jeder Anschlagseite als eine oder eine wirkungsmäßig parallele Vielzahl von Elastomerfedern (5,6) mit Knickeffekt ausgebildet sind.

2. Lager nach Anspruch 1,
dadurch **gekennzeichnet**
daß der eine der beiden Lagerghäusetöpfe (2) einen Außenflansch (7) trägt und der andere (1) eine nach radial innen offene Ringkammer (8) aufweist, in die der Außenflansch (7) mit axialem und radialem Spiel eingreift.

3. Lager nach Anspruch 2,
dadurch **gekennzeichnet,**
daß der Außenflansch (7) die Knickpuffer (5,6) beider Anschläge (10,11) des Federwegbegrenzers (4) trägt, und zwar den einen (5) auf seiner zum Gegentopf (1) weisenden Oberseite, den anderen (6) auf seiner Unterseite.

4. Lager nach einem der Ansprüche 2 oder 3,
dadurch **gekennzeichnet,**
daß die Knickpuffer (5,6) den zentralaxial angeordneten Tragfederblock (3) ringförmig, in sich geschlossen umlaufend oder segmentiert, konzentrisch umschließen, und zwar mit einem solchen radialen Abstand, daß der Tragfederblock auch bei maximaler Belastungsverformung den Knickpufferring nicht berührt.

5. Lager nach Anspruch 4,
dadurch **gekennzeichnet,**
daß der Knickpufferring (5;6) ein Elastomerpufferring ist, der mit zueinander parallelen und, soweit sie sich durch die Ringöffnung voneinander getrennt gegenüberliegen, koaxialen in ein und derselben Radialebene liegenden beidseitig offenen Kanälen (12,13) durchsetzt ist, deren Querschnitte so gestaltet sind, daß die Kanalwände (14,15) nach Überschreiten einer konstruktiv vorgegebenen Grenzlast einknicken.

6. Lager nach Anspruch 5,
dadurch **gekennzeichnet,**
daß die Querschnitte der Kanäle (12,13) im Elastomerpufferring (5;6) alternierend die Form einer stehenden Raute (13) und eines stehenden doppeltrapezförmigen Sechsecks (12) mit innenliegender kleiner Basislinie haben.

7. Lager nach einem der Ansprüche 1 bis 6,
dadurch **gekennzeichnet,**
daß der Tragfederblock (3) im unbelasteten Lager so gegen den Vektor einer bestimmungsgemäßen Soll-Auflast vorgespannt ist, daß die beiden Knickpuffer (5,6) bei statisch ruhender Soll-Last ihren zugeordneten Anschlägen (10,11) mit einem vorgegebenen Abstand berührungsfrei gegenüberliegen.

8. Lager nach einem der Ansprüche 1 bis 7,
dadurch **gekennzeichnet,**
daß der Tragfederblock (3) ein Elastomerpuffer ist, der mit Scharen untereinander paralleler, einander ohne sich zu schneiden in verschiedenen Radialebenen kreuzenden, in regelmäßigen Abständen kugelförmige Hohlräume durchsetzenden Kanälen durchsetzt ist.

## Revendications

1. Support souple amortisseur de bruit, en particulier pour machine à combustion interne, comportant un bloc support souple (3) en matière élastique entre deux pots formant boîtier du support, reprenant les efforts (1, 2), qui se recouvrent avec du jeu, axialement, de façon télescopique en pénétrant l'un dans l'autre et qui, comme tampon élastomère, se s'agrippent l'un à l'autre en formant un limiteur élastique de course agissant dans les deux sens, caractérisé en ce que le tampon d'élastomère du limiteur élastique de course (4) est réalisé, sur chacune des faces d'appui, sous la forme d'un ou d'un grand nombre de ressorts élastomères (5, 6) à effet parallèle, agissant en accordéon.

2. Support suivant la revendication 1, caractérisé en ce que l'un des deux pots formant boîtier du support (2) porte un paroi extérieure (7) et que l'autre (1) présente une chambre annulaire (8) ouverte radialement vers l'intérieur, dans laquelle le paroi extérieure (7) vient s'emboîter avec un jeu radial et axial.

3. Support suivant la revendication 2, caractérisé en ce que la paroi extérieure (7) porte les tampons en accordéon (5, 6) des deux butées d'appui (10, 11) du limiteur élastique de course (4), c'est-à-dire l'un (5) sur sa face supérieure tournée vers le pot complémentaire 1 et l'autre (6) sur sa face inférieure.

4. Support suivant la revendication 2 ou la revendication 3, caractérisé en ce que les tampons en accordéon (5, 6) entourent le bloc ressort support (3), centré axialement, en formant un anneau concentrique, segmenté ou fermé sur lui-même de façon continue, et cela avec une distance radiale telle que le bloc ressort support ne touche pas, même dans le cas de déformation maximale sous charge, l'anneau formant tampon en accordéon.

5. Support suivant la revendication 4, caractérisé en ce que l'anneau du tampon en accordéon (5, 6) est un anneau tampon en élastomère qui est traversé par des canaux ouverts de part et d'autre (12, 13), parallèles entre eux et se trouvant dans un plan et le même plan radial, et coaxiaux, dans la mesure où ils sont situés en face l'un de l'autre, séparés l'un de l'autre par l'ouverture de l'anneau, canaux dont la section est conçue de telle façon que les parois (14, 15) des canaux s'infléchissent après dépassement d'une charge limite prédéterminée par construction.

6. Support suivant la revendication 5, caractérisé en ce que les sections des canaux (12, 13) dans l'anneau du tampon en accordéon (5, 6) ont, en alternance, la forme d'un losange debout (13) et d'un hexagone en double trapèze, debout, (12) ayant sa petite base située du côté intérieur.

7. Support suivant l'une quelconque des revendications 1 à 6, caractérisé en ce que le bloc ressort support (3), quand il n'est pas en charge, est mis en prétension, en s'opposant au vecteur correspondant à une charge théorique donnée, de telle façon que les deux tampons en accordéon (5, 6), dans le cas d'une charge théorique statique d'appui, se trouvent contre leur butées (10, 11) respectives, sans contact, à une distance prédéterminée.

8. Support suivant l'une quelconque des revendications 1 à 7, caractérisé en ce que le bloc ressort support (3) est un tampon élastomère qui est traversé par des réseaux de canaux parallèles entre eux, se croisant entre eux, sans se recouper, dans des plans radiaux différents, et traversant, à des distances régulières, des espaces creux de forme sphérique.

## Claims

1. A soft mounting for insulating body-transmitted acoustic waves, in particular for mounting an internal combustion engine, said mounting comprising a soft support spring block (3) made of an elastic material and being disposed between two beaker-type housing parts (1, 2), which serve to transfer load forces into said soft support spring block, which are arranged coaxially with respect to each other and which are telescopingly inserted into one another in a radially spaced and axially mutually restrictive relationship so as to form means for restricting and limiting the deflection path of the support spring block using ancillary elastomer buffers, characterized in that each of said elastomer buffers on each end stop of the means (4) for restricting and limiting their deflection path either is one simple elastomer spring or is an elastomer spring device having the effect of a multitude of elastomer spring elements (5, 6) acting in parallel, each, respectively, showing the fact of a collapse of the spring restoration force by kinking.

2. A mounting according to claim 1, characterized in that the second beaker-type housing part (2) comprises an external flange (7) and the first beaker-type housing part (1) comprises an annular chamber (8) open radially inwards, into which chamber the ex-

9 EP 0 268 734 B1

ternal flange (7) is protruding in a radially and axially spaced relationship.

3. A mounting according to claim 2, characterized in that the external flange (7) is supporting the elastomer spring elements (5, 6) showing the kinking effect of both of the end-stop means (10, 11) of the means (4) for restricting and limiting the deflection path, whereat the first elastomer spring element (5) is arranged on the upper side of the external flange (7) facing the first beaker-type housing part (1) and the second elastomer spring element (6) is arranged on the lower side of the external flange.

4. A mounting according to one of the claims 2 or 3, characterized that the elastomer spring elements (5, 6) showing the kinking effect are enclosing the support spring block (3), which is arranged centrally and axially, in a ring-shaped way, either circularly-closed or split-up in segments, whereat the radial distance between the elastomer spring elements and the support spring block do not contact each other, even when having a maximum deflection caused by an external load.

5. A mounting according to claim 4, characterized in that the ring-shaped elastomer spring element (5, 6) showing the kinking effect is interspersed with mutually parallel and, if they are opposite each other separated by the central opening of the ring-shaped element, coaxial channels (12, 13) open on both sides and lying in the same radial plane, whereat the cross-sections of said channels are formed in such a way that the walls (14, 15) of said channels show the effect of collapse by kinking, once a load acting thereon surpasses a certain predetermined critical value.

6. A mounting according to claim 5, characterized that the cross-sections of the channels (12, 13) formed in the ring-shaped elastomer spring elements (5, 6) are alternatingly shaped like an upright standing rhomb (13) and an upright standing double trapezoidal hexagon (12) with its smaller basic line inside.

7. A mounting according to one of the claims 1 to 6, characterized in that said support spring block (3), when there is no load acting on the mounting, is pre-stressed against the direction of a predetermined load, so that the elastomer spring elements (5, 6) showing the kinking effect, when the predetermined load acting statically, are lying opposite the adjacent end stop means (10, 11) without any contact with a certain predetermined distance inbetween.

8. A mounting according to one of the claims 1 to 7, characterized in that the support spring block (3) is an elastomer spring block interspersed with groups of mutually parallel channels, said groups crossing each other in different radial planes without intersecting, said channels intersecting spherical cavities arranged regularly.

FIG. 1